# EUROPEAN PATENT SPECIFICATION

(11) **EP 4 446 725 B1**
(45) Date of publication and mention of the grant of the patent: **04.03.2026**
(21) Application number: 23899587.2
(22) Date of filing: 12.10.2023
(51) Int. Cl.: G01N 1/31

(54) **LIVE CELL STAINING DEVICE**
LEBENDZELLENFÄRBEVORRICHTUNG
DISPOSITIF DE COLORATION DE CELLULES VIVANTES

(30) Priority: 05.12.2022 CN 202211577233
(43) Date of publication of application: 16.10.2024
(73) Proprietor: Anhui Dendrite Optical Technology Co., Ltd., Hefei City, Anhui Province 230000 (CN)
(72) Inventor: CHIANG, Li-yang, Shanghai 200040 (CN); CHEN, Liang, Shanghai 200040 (CN); ZOU, Xiang, Shanghai 200040 (CN)
(74) Representative: Winter, Brandl - Partnerschaft mbB
(86) International application number: PCT/CN2023/124185
(87) International publication number: WO 2024/120006

(56) References cited:
- CN-A- 108 061 678
- CN-A- 111 610 080
- CN-A- 112 368 560
- CN-A- 113 848 207
- CN-A- 115 078 231
- CN-A- 116 296 704
- CN-U- 207 336 184
- CN-U- 214 538 871
- KR-A- 20160 131 786
- US-A1- 2021 293 671
- US-A1- 2022 206 027
- US-A1- 2022 206 027

## Description

### TECHNICAL FIELD

The present invention relates to the technical field of cell dyeing, and more particularly, relates to a live cell dyeing apparatus.

### BACKGROUND

During the fluorescence dyeing for live cell imaging analysis, when different concentrations of fluorescein sodium and methylene blue dye are used to achieve an effect of dual dyeing, processes of tissue dyeing on kidney of pig or the like include: cleaning with clean water, removing the surface membrane of the kidney, a first time of dyeing, three times of cleaning with physiological saline, a second time of dyeing, three times of cleaning with physiological saline, and so on. Existing automatic dyeing apparatuses require preparation of slides, so they are not applicable to observation on the living that can not be sliced. Fluorescent dyes need to be kept away from light, while the existing automatic dyeing apparatuses do not have the function of shading. Fluorescence phenomenon is related to the temperature, theoretically, the higher the temperature, the weaker the fluorescence intensity, so fluorescent substance at a low temperature may have significantly enhanced fluorescence intensity than under the room temperature; if porcine kidney is refrigerated in an environment of 4 degrees before the tissue dyeing, the existing automatic dyeing apparatus does not need to take into account temperatures of the tissue sample, the environment and the apparatus, then it is easy to make the objective lens fog up when observing through the microscope, which affects the observation.

If the dyeing is operated manually, a large number of manual operations affect the efficiency of tissue dyeing. The contact between human beings and tissue samples and dyes increases the chance of contamination of tissue samples and dyes, thus affecting accuracy of observation results. It is difficult to ensure the consistency of time of each operation on multiple groups of dyes with different concentrations; however, although the observation on the living needs to be completed in a short period of time, in order to avoid contamination during operating, it is necessary to carry out operations such as placing reagent bottles and cleaning the operating bench, and it is also necessary to adjust the microscope, which affects the timeliness, thereby affecting accuracy of observation results. KR 2016 0131786 A, US 2022/206027 A1, CN 111 610 080 A or CN 207 336 184 U discloses a staining apparatus for automatically dispensing solutions.

### SUMMARY

The present invention proposes a live cell dyeing apparatus, which may solve the problem of poor vital dyeing effect due to poor timeliness and easy contamination.

In view of the above, the present invention adopts the following technical solution.

A live cell dyeing device includes a cylindrical dyeing cavity placed in left-right direction, the dyeing chamber is provided with multiple square holes evenly distributed in left-right direction, a sample box movable in left-right direction is placed inside the dyeing chamber below each square hole, and multiple sample boxes are fixed together. An end cap is provided at a left end of the dyeing chamber. A rotatable cylinder is provided around an outer wall of the dyeing chamber, the rotatable cylinder being coaxial with the dyeing chamber. Multiple physiological saline reagent bottles are inserted into the rotatable cylinder, which are evenly distributed in left-right direction, one first dye bottle is inserted into the rotatable cylinder in front of each physiological saline reagent bottle, and one second dye bottle is inserted into the rotatable cylinder at the back of each physiological saline reagent bottle. The rotatable cylinder can rotate relative to the dyeing chamber. An inner wall of the rotatable cylinder abuts against the outer wall of the dyeing chamber to prevent liquid in the bottles from seeping out therebetween. A fluorescence microscope is provided on the right of the dyeing chamber, the fluorescence microscope is provided with a light shield which shields an objective lens of the fluorescence microscope and the dyeing chamber. A hot air blower is in communication with a right side of the light shield through an air pipe, the hot air blower blowing a thermostatic gas into the light shield.

The above technical solution is further described as follows.

Tracks symmetrical in front-back direction are provided in the dyeing chamber, right ends of the tracks are located on the right of the fluorescence microscope; each track is provided with a slide groove tilting downward toward a center, insert plates tilting upward toward two sides are respectively secured on a front end and a back end of each sample box, and the insert plates are inserted into the slide grooves on corresponding sides.

The above technical solution is further described as follows.

A drain pipe is inserted into a lower part of a left end of the end cap, and the drain pipe is in communication with the dyeing chamber.

The above technical solution is further described as follows.

The sample box is a box with an opening facing upward, and multiple through slots in front-back direction are evenly distributed from left to right in the sample box; there is a rectangle-frame-shaped pressing piece inside the sample box, and a fixing block is fixed onto each of four corners of a lower surface of the pressing piece.

The above technical solution is further described as follows.

A first hole is provided in a left surface of the end cap, a first operating lever movable in left-right direction is inserted through the first hole, and and a right end of the first operating lever is fixed onto a left surface of the sample box.

The above technical solution is further described as follows.

A second operating lever is fixed onto a left surface of the rotatable cylinder.

The above technical solution is further described as follows.

A blind hole is provided in a front part of the outer wall of the dyeing chamber, a pin is inserted into the blind hole, an outer end of the pin is hemispherical, and a spring is provided between an inner end of the pin and a bottom of the blind hole. Five depressions are provided in the inner wall of the rotatable cylinder, the five depressions are located where able to be aligned to the blind hole. As the rotatable cylinder rotates, the depressions are respectively in communication with the blind hole, and the first dye bottles, a middle position between the first dye bottles and the physiological saline reagent bottles, the physiological saline reagent bottles, a middle position between the the physiological saline reagent bottles and the second dye bottles, and the second dye bottles are successively positioned directly above the rotatable cylinder.

The above technical solution is further described as follows.

Two openings are respectively provided in a left side and an upper side of the light shield, an opening in the left side coinciding with a right side of the dyeing chamber, and an opening in the upper side being able to accommodate the objective lens of the fluorescent microscope therein.

The above technical solution is further described as follows.

A holder is fixed at each of left and right ends of the dyeing chamber, the holder including a plate placed below the dyeing chamber and two inclined plates in front-back direction each connecting the plate to the dyeing chamber.

The above technical solution is further described as follows.

The rotatable cylinder is provided with multiple second sockets, and the multiple physiological saline reagent bottles, multiple first dye bottles and multiple second dye bottles are respectively inserted into corresponding second holes.

In summary, due to the adoption of the above technical solution, the present invention has following beneficial effects.
(1) By operating the second operating lever to drive the rotatable cylinder to rotate, rapid dyeing and cleaning are realized; timeliness is improved and it is applicable to vital dyeing; at the same time, synchronous dyeing is performed on multiple sets of samples, which ensures consistency of time of each operation, excludes operation errors, and improves efficiency and accuracy.
(2) By operating the first operating lever to drive the multiple sample boxes containing porcine kidneys to move left and right, rapid observation of multiple sets of samples after dyeing is realized; there is no need to adjust the microscope for many times, observation on the living is completed within a short period of time, thereby improving timeliness and avoiding affecting the activity of the samples.
(3) The objective lens of the fluorescence microscope and the dyeing chamber are covered by the light shield, the hot air blower on the right of the light shield 10 blows thermostatic gas into the light shield through the air pipe, and the thermostatic gas is blown out from the opening in the upper side; hence, on the one hand, the temperature difference between the objective lens of the fluorescence microscope and the environment inside the apparatus is reduced and the objective lens of the fluorescence microscope becomes less prone to be fogged, and, on the other hand, blowing the gas to the objective lens of the fluorescent microscope can quickly eliminate the fog on the objective lens to avoid interfering with observation. The temperature is suitable, the shading effect is good, the fluorescence intensity is high, and the observation is accurate.
(4) By squeezing the four corners of the porcine kidney through the four fixing blocks of the pressing piece, on the one hand, the porcine kidney is fixed, and on the other hand, the surface of the porcine kidney is taut, which is convenient for subsequent observation.
(5) There is no contact between a person and tissue samples or dyes in the use of the present invention, so as to avoid contamination of the tissue samples and the dyes, etc. and adverse impact on the accuracy of observation results.

### BRIEF DESCRIPTION OF THE DRAWINGS

FIG. 1 is a schematic diagram of a stereostructure according to the present invention;
FIG. 2 is a schematic diagram of a stereostructure without a light shield 10 according to the present invention;
FIG. 3 is a main view according to the present invention;
FIG. 4 is a sectional view along A-A in FIG. 3;
FIG. 5 is a partial enlarged view of B in FIG. 4;
FIG. 6 is a schematic diagram of a stereostructure of a rotatable cylinder 5;
FIG. 7 is a schematic diagram of a stereostructure of a dyeing chamber 1;
FIG. 8 is a schematic diagram of a stereostructure of sample boxes 3;
FIG. 9 is a schematic diagram of a stereostructure of a pressing piece 17;
FIG. 10 is a schematic diagram of a stereostructure of the light shield 10;
FIG. 11 shows a view of cell morphology observed via a fluorescence microscope;
FIG. 12 shows a view of cell morphology observed via a fluorescence microscope; and
FIG. 13 shows a view of cell morphology observed via a fluorescence microscope.

### DETAILED DESCRIPTION OF THE EMBODIMENTS

Technical solutions in embodiments of the present invention are clearly and completely described below in conjunction with accompanying drawings used in the embodiments of the present invention. It is clear that the described embodiments are only a part of rather than all of the embodiments of the present invention. Based on the described embodiments in the present invention, all other embodiments obtained by a person of ordinary skill in the art without making creative labor fall within the scope of protection of the present invention.

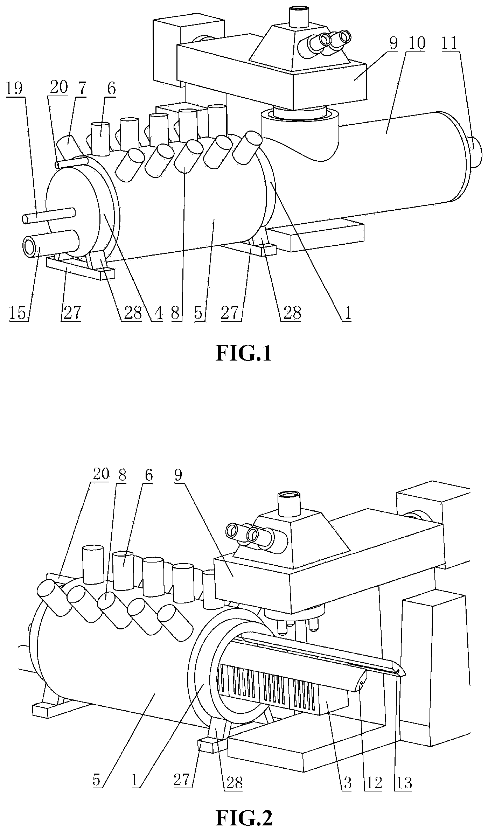

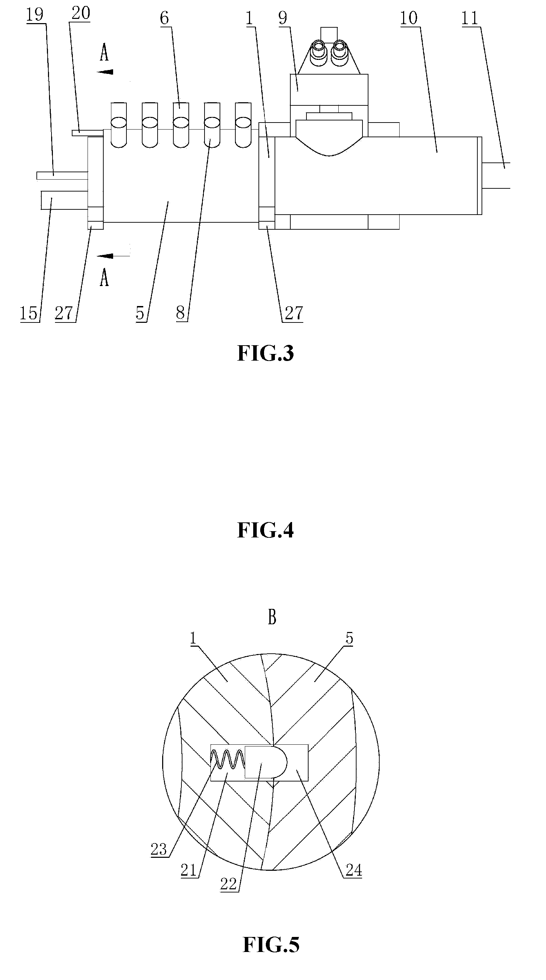

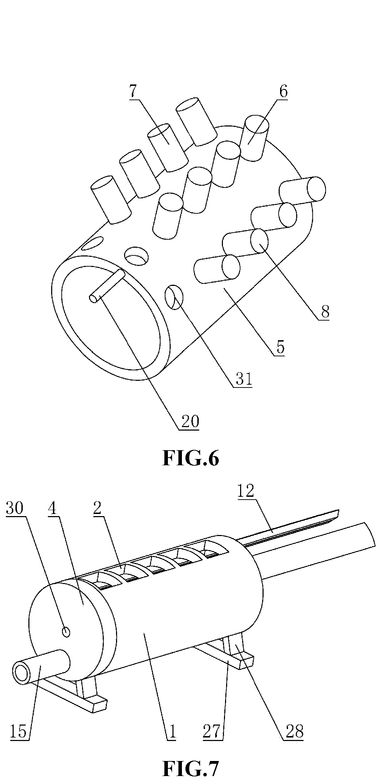

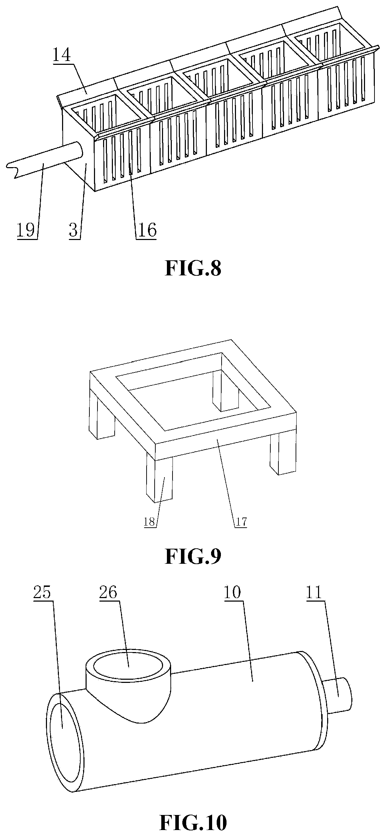

With reference to FIGS. 1-13, the present invention provides a technical solution for a live cell dyeing apparatus.

A live cell dyeing apparatus includes a cylindrical dyeing chamber 1 placed in left-right direction, the dyeing chamber 1 is provided with multiple square holes 2 which are evenly distributed in left-right direction, a sample box 3 movable in left-right direction is placed inside the dyeing chamber 1 below each square hole 2, and multiple sample boxes 3 are fixed together. An end cap 4 is provided at a left end of the dyeing chamber 1. A rotatable cylinder 5 is provided around an outer wall of the dyeing chamber 1, the rotatable cylinder 5 being coaxial with the dyeing chamber 1. Multiple physiological saline reagent bottles 6 are inserted into the rotatable cylinder 5, which are evenly distributed in left-right direction. One first dye bottle 7 is inserted into the rotatable cylinder 5 in front of each physiological saline reagent bottle 6, and one second dye bottle 8 is inserted into the rotatable cylinder 5 at the back of each physiological saline reagent bottle 6. The rotatable cylinder 5 can rotate relative to the dyeing chamber 1. An inner wall of the rotatable cylinder 5 abuts against the outer wall of the dyeing chamber 1, to prevent the liquid in the bottles from seeping out between the inner wall of the rotatable cylinder 5 and the outer wall of the dyeing chamber 1. A fluorescence microscope 9 is provided on the right of the dyeing chamber 1. The fluorescence microscope 9 is provided with a light shield 10 which shades an objective lens of the fluorescence microscope 9 and the dyeing chamber 1. A hot air blower is in communication with a right side of the light shield 10 through an air pipe 11, and the hot air blower blows a thermostatic gas into the light shield 10.

Tracks 12 are provided in the dyeing chamber 1, the tracks 12 being symmetrical in front-back direction. Right ends of the tracks 12 are located on the right of the fluorescence microscope 9. Each track 12 is provided with a slide groove 13 tilting downward toward a center, insert plates 14 tilting upward toward two sides are respectively secured on a front end and a back end of each sample box 3, and the insert plates 14 are inserted into the slide grooves 13 on corresponding sides.

A drain pipe 15 is inserted into a lower part of a left end of the end cap 4, and the drain pipe 15 is in communication with the dyeing chamber 1.

The sample box 3 is a box with an opening facing upward. Multiple through slots 16 in the front-back direction are evenly distributed from left to right in the sample box 3. Inside the sample box 3, there is a rectangle-frame-shaped pressing piece 17, and a fixing block 18 is fixed onto each of four corners of a lower surface of the pressing piece 17.

A first hole 30 is provided in a left surface of the end cap 4, a first operating lever 19 movable in left-right direction is inserted through the first hole 30, and a right end of the first operating lever 19 is fixed onto a left surface of the sample box 3.

A second operating lever 20 is fixed onto a left surface of the rotatable cylinder 5.

A blind hole 21 is provided in a front part of the outer wall of the dyeing chamber 1; a pin 22 is inserted into the blind hole 21; an outer end of the pin 22 is hemispherical, and a spring 23 is provided between an inner end of the pin 22 and a bottom of the blind hole 21. Five depressions 24 are provided in the inner wall of the rotatable cylinder 5; the five depressions 24 are located where able to be aligned to the blind hole 21, and as the rotatable cylinder 5 rotates, the depressions 24 can respectively be in communication with the blind hole 21; in addition, when the five depressions 24 are in communication with the blind hole 21 respectively as the rotatable cylinder 5 rotates, the first dye bottles 7, a middle position between the first dye bottles 7 and the physiological saline reagent bottles 6, the physiological saline reagent bottles 6, a middle position between the the physiological saline reagent bottles 6 and the second dye bottles 8, and the second dye bottles 8 are successively positioned directly above the rotatable cylinder 5.

Two openings are respectively provided in a left side and an upper side of the light shield 10, opening 25 in the left side coinciding with a right side of the dyeing chamber 1, and opening 26 in the upper side being able to accommodate the objective lens of the fluorescence microscope 9 therein.

A holder is fixed at each of left and right ends of the dyeing chamber 1. The holder includes a plate 27 placed below the dyeing chamber 1 and two inclined plates 28 in front-back direction each connecting the plate 27 to the dyeing chamber 1.

The rotatable cylinder 5 is provided with multiple second holes 31, where multiple physiological saline reagent bottles 6, multiple first dye bottles 7 and multiple second dye bottles 8 are respectively inserted into corresponding second holes 31.

Principle of operating is given hereinafter.

Preparations before tissue dyeing on porcine kidneys 29 using different concentrations of fluorescein sodium and methylene blue dye for effect of dual dyeing are described as follows.
1. Preparation of porcine kidneys 29. A number of fresh porcine kidneys 29 are procured and refrigerated at 4°C for spare use. The fresh porcine kidneys 29 are washed with water, divided equally into pieces, and respectively loaded into multiple sample boxes 3. In each sample box 3, a pressing piece 17 is placed into the sample box 3, so that four corners of the porcine kidney 29 are pressed by four fixing blocks 18 to, on the one hand, fix the porcine kidney 29 and, on the other hand, make surfaces of the porcine kidney 29 to be taut, facilitating subsequent observation.
2. Preparation of reagent bottles. Fluorescein sodium of concentrations of 0.1%, 0.25%, 0.5% and 1% are loaded into multiple first dye bottles 7 from left to right, respectively; methylene blue dye of concentrations of 0.5%, 1%, 2% and 3% are loaded into multiple second dye bottles 8 from left to right, respectively; and plenty of physiological saline is injected into multiple physiological saline reagent bottles 6.
3. Apparatus adjustment. By operating the second operating lever 20 to move back and forth, the rotatable cylinder 5 is driven to rotate and the middle position between the first dye bottles 7 and the physiological saline reagent bottles 6 is placed directly above the rotatable cylinder 5, where the square holes 2 in the dyeing chamber 1 are closed by the inner wall of the rotatable cylinder 5, and the inner wall of the rotatable cylinder 5 abuts against the outer wall of the dyeing chamber 1 to prevent the liquid in the bottles from seeping out between the inner wall of the rotatable cylinder 5 and the outer wall of the dyeing chamber 1. It is to be noted that, in the above process, the outer end of the pin 22 inserted in the blind hole 21 is hemispherical, as the rotatable cylinder 5 rotates and squeezes the outer end of the pin 22 so that the pin 22 compresses the spring 23, the pin 22 may enter the blind hole 21 completely and the rotatable cylinder 5 can rotate; as the rotatable cylinder 5 rotates and causes any depression 24 to be in communication with the blind hole 21, the spring 23 pushes, at the inner end of the pin 22, the pin 22 into the depression 24 to jam the rotatable cylinder 5, then the rotatable cylinder 5 stops rotating. In addition, since five depressions 24 are provided in the inner wall of the rotatable cylinder 5 and are located where able to be aligned to the blind hole 21, as the rotatable cylinder 5 rotates, the first dye bottles 7, the middle position between the first dye bottles 7 and the physiological saline reagent bottles 6, the physiological saline reagent bottles 6, the middle position between the the physiological saline reagent bottles 6 and the second dye bottles 8, and the second dye bottles 8 can be and are successively positioned directly above the rotatable cylinder 5. The multiple physiological saline reagent bottles 6, the multiple first dye bottles 7 and the multiple second dye bottles 8 are respectively inserted into corresponding second holes 31. The multiple sample boxes 3 containing porcine kidneys 29 are placed on the right of the tracks 12, the insert plates 14 on the sample boxes 3 are inserted into the slide grooves 13 on corresponding sides, and the sample boxes 3 are moved to the left so that the first operating lever 19 is inserted through the first hole 30. Here, the light shield 10 is not connected to the apparatus.

Dyeing processes are described hereinafter.
1. The multiple sample boxes 3 containing porcine kidneys 29 are driven to move to the right in response to operation on the first operating lever 19, so that each porcine kidney 29 is placed under a microscope, and surface membrane of each porcine kidney 29 is removed using scissors and tweezers. Then, the multiple sample boxes 3 containing porcine kidneys 29 are driven to move to the left in response to operation on the first operating lever 19, so that the multiple sample boxes 3 are placed under corresponding square holes 2. Then, the opening 25 in the left side of the light shield 10 is arranged coinciding with the right side of the dyeing chamber 1, the opening 26 in the upper side of the light shield 10 can accommodate the objective lens of the fluorescence microscope 9, and the light shield 10 shades the objective lens of the fluorescence microscope 9 and the dyeing chamber 1; the hot air blower on the right of the light shield 10 blows thermostatic gas into the light shield 10 through the air pipe 11, and the thermostatic gas is blown out from the opening 26 in the upper side; hence, on the one hand, the temperature difference between the objective lens of the fluorescence microscope 9 and the environment inside the apparatus is reduced and the objective lens of the fluorescence microscope 9 becomes less prone to be fogged, and, on the other hand, blowing the gas to the objective lens of the fluorescent microscope 9 can quickly eliminate the fog on the objective lens to avoid interfering with observation.
2. The rotatable cylinder 5 is driven to rotate in response to operation on the second operating lever 20, and accordingly, the first dye bottles 7 are placed directly above the rotatable cylinder 5; the first dye bottles 7 are in communication with the dyeing chamber 1 through the second holes 31 in the rotatable cylinder 5, and the first dye bottles 7 apply different concentrations of fluorescein sodium to the porcine kidneys 29 below and surfaces of the porcine kidneys 29 are dyed for one minute. Then, the rotatable cylinder 5 is driven to rotate in response to operation on the second operating lever 20; accordingly, the physiological saline reagent bottles 6 are placed directly above the rotatable cylinder 5, and the porcine kidneys 29 are cleaned by physiological saline from the physiological saline reagent bottles 6. The rotatable cylinder 5 is driven to rotate in response to operation on the second operating lever 20, and accordingly, the middle position between the first dye bottles 7 and the physiological saline reagent bottles 6 is placed directly above the rotatable cylinder 5; the second holes 31 corresponding to the physiological saline reagent bottles 6 are closed by the outer wall of the dyeing chamber 1, the cleaning is stopped, and the dye and physiological saline in the sample boxes 3 flow downward to a lower part of the dyeing chamber 1 through the through slots 16 and are drained through the drain pipe 15.
   The porcine kidneys 29 are further cleaned twice using physiological saline in the same manner as described above.
3. The rotatable cylinder 5 is driven to rotate in response to operation on the second operating lever 20, and accordingly, the second dye bottles 8 are placed directly above the rotatable cylinder 5. With reference to operating steps in the above process 2, the surfaces of the kidneys are dyed with different concentrations of methylene blue dye for one minute, and then cleaned three times with physiological saline.
4. The multiple sample boxes 3 containing porcine kidneys 29 are driven to move to the right in response to operation on the first operating lever 19; accordingly, the multiple sample boxes 3 are successively placed under the microscope 9 and observed under the microscope at a wavelength of 470nm.

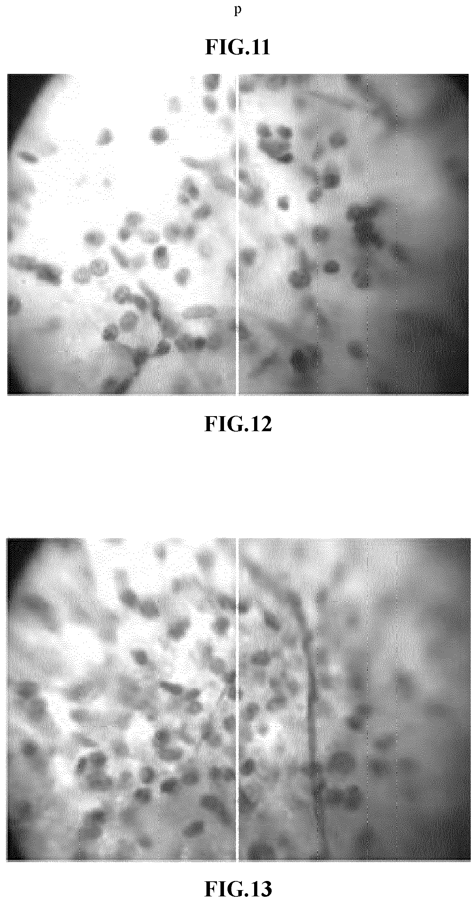

Observation results are shown in FIGS. 11, 12 and 13. The use of fluorescein sodium enables all cells and intercellular substances to emit light, so they are shown to be white; the use of methylene blue can absorb the light emitted by the fluorescein sodium, and cell nucleus is dyed by methylene blue to be opaque and it is shown to be black; and finally, the whole cell emits light, but the cell nucleus contains the dye absorbing the light, so it will show that cytoplasm is white (luminescent) and the cell nucleus is black (opaque).

It is worth noting that the above embodiments are only about an experiment with the effect of dual dyeing using different concentrations of fluorescein sodium and methylene blue dye, nevertheless, the apparatus is also applicable to fluorescence dyeing for live cell imaging analysis in other experiments. Appropriate dyes are selected according to the need. The dye that can be used in the first dye bottles 7 may include fluorescein sodium, indocyanine green, and other conventional fluorescence dyes. The dye in the second dye bottles 8 is not required to be fluorescent, however, the present method can still be utilized without influence if a qualified dye in the second dye bottles 8 has fluorescent property. The dye in the second dye bottles 8 can absorb the light emitted by the dye in the first dye bottles 7, and the dye that can be used may include hematoxylin, indigo rouge, methylene blue, and the like.

Preferred embodiments of the present invention are described as above, however, the scope of protection of the present invention is not limited thereto.

## Claims

1. A live cell dyeing apparatus, **characterized by** comprising a cylindrical dyeing chamber (1) placed in left-right direction, wherein the dyeing chamber (1) is provided with a plurality of square holes (2) evenly distributed in left-right direction, a sample box (3) movable in left-right direction is placed inside the dyeing chamber (1) below each square hole (2), and a plurality of sample boxes (3) are fixed together; wherein an end cap (4) is provided at a left end of the dyeing chamber (1); wherein a rotatable cylinder (5) is provided around an outer wall of the dyeing chamber (1), the rotatable cylinder (5) being coaxial with the dyeing chamber (1), a plurality of physiological saline reagent bottles (6) are inserted into the rotatable cylinder (5), which are evenly distributed in left-right direction, one first dye bottle (7) is inserted into the rotatable cylinder (5) in front of each physiological saline reagent bottle (6), and one second dye bottle (8) is inserted into the rotatable cylinder (5) at the back of each physiological saline reagent bottle (6); wherein the rotatable cylinder (5) is capable of rotating relative to the dyeing chamber (1); wherein an inner wall of the rotatable cylinder (5) abuts against the outer wall of the dyeing chamber (1) to prevent liquid in the bottles from seeping out between the inner wall of the rotatable cylinder (5) and the outer wall of the dyeing chamber (1); wherein a fluorescence microscope (9) is provided on the right of the dyeing chamber (1), the fluorescence microscope (9) is provided with a light shield (10) which shields an objective lens of the fluorescence microscope (9) and the dyeing chamber (1); wherein a hot air blower is in communication with a right side of the light shield (10) through an air pipe (11), the hot air blower blowing a thermostatic gas into the light shield (10).

2. The live cell dyeing apparatus according to claim 1, wherein tracks (12) symmetrical in front-back direction are provided in the dyeing chamber (1), right ends of the tracks (12) are located on the right of the fluorescence microscope (9); each track (12) is provided with a slide groove (13) tilting downward toward a center, insert plates (14) tilting upward toward two sides are respectively secured on a front end and a back end of each sample box (3), and the insert plates (14) are inserted into the slide grooves (13) on corresponding sides.

3. The live cell dyeing apparatus according to claim 1, wherein a drain pipe (15) is inserted into a lower part of a left end of the end cap (4), and the drain pipe (15) is in communication with the dyeing chamber (1).

4. The live cell dyeing apparatus according to claim 1, wherein the sample box (3) is a box with an opening facing upward, and a plurality of through slots (16) in front-back direction are evenly distributed from left to right in the sample box (3); wherein there is a rectangle-frame-shaped pressing piece (17) inside the sample box (3), and a fixing block (18) is fixed onto each of four corners of a lower surface of the pressing piece (17).

5. The live cell dyeing apparatus according to claim 1, wherein a first hole (30) is provided in a left surface of the end cap (4), a first operating lever (19) movable in left-right direction is inserted through the first hole (30), and a right end of the first operating lever (19) is fixed onto a left surface of the sample box (3).

6. The live cell dyeing apparatus according to claim 1, wherein a second operating lever (20) is fixed onto a left surface of the rotatable cylinder (5).

7. The live cell dyeing apparatus according to claim 1, wherein a blind hole (21) is provided in a front part of the outer wall of the dyeing chamber (1), a pin (22) is inserted into the blind hole (21), an outer end of the pin (22) is hemispherical, and a spring (23) is provided between an inner end of the pin (22) and a bottom of the blind hole (21); wherein five depressions (24) are provided in the inner wall of the rotatable cylinder (5), the five depressions (24) are located where able to be aligned to the blind hole (21); and wherein as the rotatable cylinder (5) rotates, the depressions (24) are respectively in communication with the blind hole (21), and the first dye bottles (7), a middle position between the first dye bottles (7) and the physiological saline reagent bottles (6), the physiological saline reagent bottles (6), a middle position between the the physiological saline reagent bottles (6) and the second dye bottles (8), and the second dye bottles (8) are successively positioned directly above the rotatable cylinder (5).

8. The live cell dyeing apparatus according to claim 1, wherein two openings are respectively provided in a left side and an upper side of the light shield (10), an opening (25) in the left side coinciding with a right side of the dyeing chamber (1), and an opening (26) in the upper side being able to accommodate the objective lens of the fluorescent microscope (9) therein.

9. The live cell dyeing apparatus according to claim 1, wherein a holder is fixed at each of left and right ends of the dyeing chamber (1), the holder comprising a plate (27) placed below the dyeing chamber (1) and two inclined plates (28) in front-back direction each connecting the plate (27) to the dyeing chamber (1).

10. The live cell dyeing apparatus according to claim 1, wherein the rotatable cylinder (5) is provided with a plurality of second holes (31), and the plurality of physiological saline reagent bottles (6), first dye bottles (7) and second dye bottles (8) are respectively inserted into corresponding second holes (31).

## Patentansprüche

1. Lebendzellfärbevorrichtung, **gekennzeichnet durch** eine zylindrische Färbekammer (1), die in einer Links-Rechts-Richtung angeordnet ist, wobei die Färbekammer (1) mit einer Mehrzahl von quadratischen Löchern (2) versehen ist, die gleichmäßig in einer Links-Rechts-Richtung verteilt sind, wobei ein Probenkasten (3), der in einer Links-Rechts-Richtung beweglich ist, innerhalb der Färbekammer (1) unter jedem quadratischen Loch (2) angeordnet ist, und eine Mehrzahl von Probenkästen (3) aneinander befestigt sind; wobei eine Endkappe (4) an einem linken Ende der Färbekammer (1) vorgesehen ist; wobei ein drehbarer Zylinder (5) um eine Außenwand der Färbekammer (1) vorgesehen ist, wobei der drehbare Zylinder (5) koaxial mit der Färbekammer (1) ist, wobei eine Mehrzahl von Reagenzflaschen (6) für physiologische Kochsalzlösung in den drehbaren Zylinder (5) eingesetzt ist, die gleichmäßig in einer Links-Rechts-Richtung verteilt sind, wobei eine erste Farbstoffflasche (7) in den drehbaren Zylinder (5) vor jeder der Reagenzflaschen (6) für physiologische Kochsalzlösung eingesetzt ist, und eine zweite Farbstoffflasche (8) in den drehbaren Zylinder (5) an der Rückseite jeder der Reagenzflaschen (6) für physiologische Kochsalzlösung eingesetzt ist; wobei der drehbare Zylinder (5) in der Lage ist, sich relativ zu der Färbekammer (1) zu drehen; wobei eine Innenwand des drehbaren Zylinders (5) an der Außenwand der Färbekammer (1) anliegt, um zu verhindern, dass Flüssigkeit in den Flaschen zwischen der Innenwand des drehbaren Zylinders (5) und der Außenwand der Färbekammer (1) heraustropft; wobei ein Fluoreszenzmikroskop (9) rechts von der Färbekammer (1) vorgesehen ist, wobei das Fluoreszenzmikroskop (9) mit einer Lichtabschirmung (10) versehen ist, die eine Objektivlinse des Fluoreszenzmikroskops (9) und die Färbekammer (1) abschirmt; wobei ein Heißluftgebläse mit einer rechten Seite der Lichtabschirmung (10) durch ein Luftrohr (11) in Verbindung steht, und das Heißluftgebläse ein thermostatisches Gas in die Lichtabschirmung (10) bläst.

2. Lebendzellfärbevorrichtung nach Anspruch 1, wobei Spuren (12), die in einer Vorwärts-Rückwärts-Richtung symmetrisch sind, in der Färbekammer (1) vorgesehen sind, rechte Enden der Spuren (12) rechts von dem Fluoreszenzmikroskop (9) angeordnet sind; wobei jede Spur (12) mit einer Gleitnut (13) versehen ist, die nach unten zu einer Mitte hin geneigt ist, Einsatzplatten (14), die nach oben zu zwei Seiten hin geneigt sind, jeweils an einem vorderen Ende und einem hinteren Ende jedes Probenkastens (3) befestigt sind, und die Einsatzplatten (14) in die Gleitnuten (13) an entsprechenden Seiten eingesetzt sind.

3. Lebendzellfärbevorrichtung nach Anspruch 1, wobei ein Ablaufrohr (15) in einen unteren Teil eines linken Endes der Endkappe (4) eingesetzt ist, und das Ablaufrohr (15) mit der Färbekammer (1) in Verbindung steht.

4. Lebendzellfärbevorrichtung nach Anspruch 1, wobei der Probenkasten (3) ein Kasten mit einer Öffnung ist, die nach oben weist, und eine Mehrzahl von Durchgangsschlitzen (16) in einer Vorwärts-Rückwärts-Richtung gleichmäßig von links nach rechts in dem Probenkasten (3) verteilt sind; wobei ein rechteckrahmenförmiges Pressstück (17) innerhalb des Probenkastens (3) angeordnet ist, und ein Befestigungsblock (18) an jeder von vier Ecken einer unteren Oberfläche des Pressstücks (17) befestigt ist.

5. Lebendzellfärbevorrichtung nach Anspruch 1, wobei ein erstes Loch (30) in einer linken Oberfläche der Endkappe (4) vorgesehen ist, ein erster Betätigungshebel (19), der in einer Links-Rechts-Richtung bewegbar ist, durch das erste Loch (30) eingesetzt ist, und ein rechtes Ende des ersten Betätigungshebels (19) an einer linken Oberfläche des Probenkastens (3) befestigt ist.

6. Lebendzellfärbevorrichtung nach Anspruch 1, wobei ein zweiter Betätigungshebel (20) an einer linken Oberfläche des drehbaren Zylinders (5) befestigt ist.

7. Lebendzellfärbevorrichtung nach Anspruch 1, wobei ein Blindloch (21) in einem vorderen Teil der Außenwand der Färbekammer (1) vorgesehen ist, ein Stift (22) in das Blindloch (21) eingesetzt ist, ein äußeres Ende des Stifts (22) halbkugelförmig ist, und eine Feder (23) zwischen einem inneren Ende des Stifts (22) und einem Boden des Blindlochs (21) vorgesehen ist; wobei fünf Vertiefungen (24) in der Innenwand des drehbaren Zylinders (5) vorgesehen sind, die fünf Vertiefungen (24) dort angeordnet sind, wo sie mit dem Blindloch (21) ausrichtbar sind; und wobei, wenn sich der drehbare Zylinder (5) dreht, die Vertiefungen (24) jeweils mit dem Blindloch (21) in Verbindung stehen, die ersten Farbstoffflaschen (7), eine mittlere Position zwischen den ersten Farbstoffflaschen (7) und den Reagenzflaschen (6) für physiologische Kochsalzlösung, die Reagenzflaschen (6) für physiologische Kochsalzlösung, eine mittlere Position zwischen den Reagenzflaschen (6) für physiologische Kochsalzlösung und den zweiten Farbstoffflaschen (8), und die zweiten Farbstoffflaschen (8) nacheinander direkt über dem drehbaren Zylinder (5) positioniert sind.

8. Lebendzellfärbevorrichtung nach Anspruch 1, wobei zwei Öffnungen jeweils in einer linken Seite und einer oberen Seite der Lichtabschirmung (10) vorgesehen sind, eine Öffnung (25) in der linken Seite mit einer rechten Seite der Färbekammer (1) zusammenfällt, und eine Öffnung (26) in der oberen Seite in der Lage ist, die Objektivlinse des Fluoreszenzmikroskops (9) darin aufzunehmen.

9. Lebendzellfärbevorrichtung nach Anspruch 1, wobei ein Halter an jedem der linken und rechten Enden der Färbekammer (1) befestigt ist, der Halter eine Platte (27), die unter der Färbekammer (1) angeordnet ist, und zwei geneigte Platten (28) in einer Vorwärts-Rückwärts-Richtung aufweist, die jeweils die Platte (27) mit der Färbekammer (1) verbinden.

10. Lebendzellfärbevorrichtung nach Anspruch 1, wobei der drehbare Zylinder (5) mit einer Mehrzahl von zweiten Löchern (31) versehen ist, und die Mehrzahl von Reagenzflaschen (6) für physiologische Kochsalzlösung, ersten Farbstoffflaschen (7) und zweiten Farbstoffflaschen (8) jeweils in entsprechende zweite Löcher (31) eingesetzt sind.

## Revendications

1. Appareil de coloration de cellules vivantes, **caractérisé en ce qu'**il comprend une chambre de coloration cylindrique (1) placée dans le sens gauche-droite, dans lequel la chambre de coloration (1) est munie d'une pluralité de trous carrés (2) uniformément répartis dans le sens gauche-droite, une boîte d'échantillon (3) mobile dans le sens gauche-droite est placée à l'intérieur de la chambre de coloration (1) sous chaque trou carré (2), et une pluralité de boîtes d'échantillon (3) sont fixées ensemble ; dans lequel un capuchon d'extrémité (4) est prévu à une extrémité gauche de la chambre de coloration (1) ; dans lequel un cylindre rotatif (5) est disposé autour d'une paroi extérieure de la chambre de coloration (1), le cylindre rotatif étant coaxial à la chambre de coloration (1), une pluralité de flacons de solution saline physiologique (6) sont insérés dans le cylindre rotatif (5), qui sont répartis uniformément dans le sens gauche-droite, un premier flacon de colorant (7) est inséré dans le cylindre rotatif (5) devant chaque flacon de solution saline physiologique (6), et un second flacon de colorant (8) est inséré dans le cylindre rotatif (5) derrière chaque flacon de solution saline physiologique (6) ; dans lequel le cylindre rotatif (5) peut tourner par rapport à la chambre de coloration (1) ; dans lequel une paroi intérieure du cylindre rotatif (5) est en contact avec la paroi extérieure de la chambre de coloration (1) afin d'empêcher toute fuite de liquide contenu dans les flacons entre la paroi intérieure du cylindre rotatif (5) et la paroi extérieure de la chambre de coloration (1) ; dans lequel un microscope à fluorescence (9) est prévu à droite de la chambre de coloration (1), le microscope à fluorescence (9) est muni d'un écran de lumière (10) qui protège une lentille d'objectif du microscope à fluorescence (9) et de la chambre de coloration (1) ; dans lequel un souffleur d'air chaud communique avec un côté droit de l'écran de lumière (10) par l'intermédiaire d'un tuyau d'air (11), le souffleur d'air chaud soufflant un gaz thermostatique dans l'écran de lumière (10).

2. Appareil de coloration de cellules vivantes selon la revendication 1, dans lequel des pistes (12) symétriques dans le sens avant-arrière sont prévues dans la chambre de coloration (1), les extrémités droites des pistes (12) sont situées à droite du microscope à fluorescence (9) ; chaque piste (12) est munie d'une rainure coulissante (13) inclinée vers le bas vers un centre, des plaques d'insertion (14) inclinées vers le haut vers deux côtés sont respectivement fixées à une extrémité avant et à une extrémité arrière de chaque boîte d'échantillon (3), et les plaques d'insertion (14) sont insérées dans les rainures coulissantes (13) des côtés correspondants.

3. Appareil de coloration de cellules vivantes selon la revendication 1, dans lequel un tuyau de drainage (15) est inséré dans une partie inférieure d'une extrémité gauche du capuchon d'extrémité (4), et le tuyau de drainage (15) est en communication avec la chambre de coloration (1).

4. Appareil de coloration de cellules vivantes selon la revendication 1, dans lequel la boîte d'échantillon (3) est une boîte avec une ouverture orientée vers le haut, et une pluralité de fentes traversantes (16) dans le sens avant-arrière sont réparties uniformément de gauche à droite dans la boîte d'échantillon (3) ; dans lequel il y a une pièce de pression en forme de cadre rectangulaire (17) à l'intérieur de la boîte d'échantillon (3), et un bloc de fixation (18) est fixé sur chacun des quatre coins d'une surface inférieure de la pièce de pression (17).

5. Appareil de coloration de cellules vivantes selon la revendication 1, dans lequel un premier trou (30) est prévu dans une surface gauche du capuchon d'extrémité (4), un premier levier de commande (19) mobile dans le sens gauche-droite est inséré à travers le premier trou (30), et une extrémité droite du premier levier de commande (19) est fixée sur une surface gauche de la boîte d'échantillon (3).

6. Appareil de coloration de cellules vivantes selon la revendication 1, dans lequel un second levier de commande (20) est fixé sur une surface gauche du cylindre rotatif (5).

7. Appareil de coloration de cellules vivantes selon la revendication 1, dans lequel un trou borgne (21) est prévu dans une partie avant de la paroi extérieure de la chambre de coloration (1), une tige (22) est insérée dans le trou borgne (21), une extrémité extérieure de la tige (22) est hémisphérique, et un ressort (23) est prévu entre une extrémité intérieure de la tige (22) et le fond du trou borgne (21) ; dans lequel cinq dépressions (24) sont prévues dans la paroi intérieure du cylindre rotatif (5), les cinq dépressions (24) sont situées de manière à pouvoir être alignées avec le trou borgne (21) ; et dans lequel, lorsque le cylindre rotatif (5) tourne, les dépressions (24) sont respectivement en communication avec le trou borgne (21), et les premiers flacons de colorant (7), une position médiane entre les premiers flacons de colorant (7) et les flacons de solution saline physiologique (6), les flacons de solution saline physiologique (6), une position médiane entre les flacons de solution saline physiologique (6) et les seconds flacons de colorant (8), et les seconds flacons de colorant (8) sont successivement positionnés directement au-dessus du cylindre rotatif (5).

8. Appareil de coloration de cellules vivantes selon la revendication 1, dans lequel deux ouvertures sont respectivement prévues sur un côté gauche et un côté supérieur de l'écran de lumière (10), une ouverture (25) sur le côté gauche coïncidant avec un côté droit de la chambre de coloration (1), et une ouverture (26) sur le côté supérieur pouvant accueillir la lentille d'objectif du microscope à fluorescence (9) qui s'y trouve.

9. Appareil de coloration de cellules vivantes selon la revendication 1, dans lequel un support est fixé à chacune des extrémités gauche et droite de la chambre de coloration (1), le support comprenant une plaque (27) placée sous la chambre de coloration (1) et deux plaques inclinées (28) dans le sens avant-arrière reliant chacune la plaque (27) à la chambre de coloration (1).

10. Appareil de coloration de cellules vivantes selon la revendication 1, dans lequel le cylindre rotatif (5) est muni d'une pluralité de seconds trous (31), et la pluralité de flacons de solution saline physiologique (6), de premiers flacons de colorant (7) et de seconds flacons de colorant (8) sont respectivement insérés dans les seconds trous correspondants (31).
